# EUROPÄISCHE PATENTSCHRIFT

(11) **EP 1 964 701 B1**
(45) Veröffentlichungstag und Bekanntmachung des Hinweises auf die Patenterteilung: **02.09.2009**
(21) Anmeldenummer: 07004036.5
(22) Anmeldetag: 27.02.2007
(51) Int. Cl.: B60J 7/00

(54) **Abschattungsvorrichtung für ein Kraftfahrzeug**
Shading device for a motor vehicle
Dispositif abat-jour pour un véhicule automobile

(43) Veröffentlichungstag der Anmeldung: 03.09.2008
(73) Patentinhaber: Webasto AG, 82131 Stockdorf (DE)
(72) Erfinder: Rockelmann, Andreas, 81249 München (DE); Thalhammer, Marco, 86911 Diessen am Ammersee (DE)
(74) Vertreter: advotec.

(56) Entgegenhaltungen:
- WO-A-20/06053520
- DE-A1- 10 163 122
- DE-B3-102005 048 207
- DE-C1- 19 910 830
- GB-A- 2 202 806
- US-A- 4 925 238
- US-A- 6 086 133

## Beschreibung

Die Erfindung betrifft eine Abschattungsvorrichtung für ein Kraftfahrzeug mit den Merkmalen des Oberbegriffs des Patentanspruchs 1.

Eine derartige Abschattungsvorrichtung ist beispielsweise aus der WO 2006/053520 A2 bekannt und als Rolloanordnung ausgebildet, mittels der ein transparenter Dachbereich eines Fahrzeugs wahlweise abgeschattet oder freigegeben werden kann. Diese Rolloanordnung umfasst als Abschattungselement eine aus einem im Wesentlichen opaken Material gefertigte Rollobahn, das auf eine Wickeleinrichtung aufwickelbar bzw. von dieser abwickelbar ist. An dem der Wickeleinrichtung abgewandten Ende, d. h. an ihrem freien Ende weist die Rollobahn einen Zugspriegel auf, der sich in Fahrzeugquerrichtung erstreckt und einen starren Abschnitt darstellt, der mit seinen Enden über jeweils einen Führungsabschnitt an seitlichen Führungsschienen geführt ist. Bei einem außermittigen Greifen bzw. Betätigen des Zugspriegels wird ein Moment auf diesen ausgeübt, so dass es zu einem Verklemmen des Zugspriegels in den Führungsschienen kommen kann, d. h. es besteht das Risiko, dass der sogenannte Schubladeneffekt auftritt und der verklemmte Zustand des Zugspriegels erst wieder gelöst werden muss.

Des Weiteren ist es aus der DE 199 10 830 C1 bekannt, eine Rolloanordnung eines Fahrzeugdachs, die eine Rollobahn mit einem Zugspriegel aufweist, mit einem Seilsystem zu versehen, das zwei Seile aufweist, die beidseits an dem Zugspriegel angreifen und auf mit einer Wickelwelle der Rollobahn verbundene Seilspindeln aufwickelbar sind. Durch das Seilsystem kann einem Verkanten und Verklemmen des Zugspriegels in seitlichen Führungsschienen entgegengewirkt werden. Die für das Seilsystem benötigten Baumteile erfordern aber einen nicht immer zur Verfügung stehenden Bauraum in dem Fahrzeugsdach und verursachen zudem Bauteil- und Fertigungskosten.

Des Weiteren ist es aus der Praxis bekannt, an Zugspriegeln von Rolloanordnungen der vorstehend beschriebenen Art Gleitersysteme vorzusehen, die an einer Kanalführung oder Stegführung der jeweiligen Führungsschiene gleitend geführt sind. In der Regel bestehen die Gleitersysteme aus einem Kunststoffelement, das an der üblicherweise aus Aluminium gefertigten Führungsschiene geführt ist.

Aus der Druckschrift DE 101 63 122 A1 ist eine Rolloanordnung mit einer Rollobahn bekannt, die mit einem sich quer zur Ausziehrichtung erstreckenden Zugspriegel versehen ist. Der Zugspriegel ist mit seinen Enden an seitlichen Führungsschienen geführt, und zwar jeweils über einen Schlitten. Die Schlitten umfassen jeweils Rollen, die an der betreffenden Führungsschiene abrollen.

Der Erfindung liegt die Aufgabe zugrunde, eine Abschattungsvorrichtung für ein Kraftfahrzeug zu schaffen, die eine optimiert geführte Rollobahn aufweist.

Diese Aufgabe ist erfindungsgemäß durch die Abschattungsvorrichtung mit den Merkmalen des Patentanspruchs 1 gelöst.

Die Führungsabschnitte des starren Abschnitts des Abschattungselementes sind jeweils mit mindestens einer Rolle versehen, die sich an der jeweiligen Führungsschiene abstützt bzw. an dieser abrollt. Die damit beidseits des Abschattungselements angeordneten Rollen wirken bei einem beispielsweise manuell auf den starren Abschnitt ausgeübten Drehmoment einem Verkanten oder Verklemmen von dessen Führungselementen an der Führungsbahn der jeweiligen Führungsschiene entgegen, da sie vor einem Verkanten oder Verklemmen der Führungselemente an der jeweiligen Führungsbahn auf dieser abrollen. Dem so genannten Schubladeneffekt wird also entgegengewirkt. Es ist nur eine Rollreibung und keine hohe Gleitreibung zwischen den Führungselementen und den Führungsschienen zu überwinden. Damit ist ein manuelles, gegebenenfalls stufenloses Verstellen eines Abschattungselementes der Abschattungsvorrichtung möglich, ohne dass hierzu ein Seilsystem oder sonstige aufwändige Maßnahmen zur Führung des starren Abschnitts erforderlich wären, was sich auch positiv auf den für die Abschattungsvorrichtung erforderlichen Bauraum auswirkt. Durch die erfindungsgemäße Ausgestaltung einer Abschattungsvorrichtung lassen sich auch die erforderlichen Bauteile und die zur Montage der Abschattungsvorrichtung erforderliche Montagezeit verringern.

Die Abschattungsvorrichtung nach der Erfindung stellt beispielsweise eine Vorrichtung zur Abschattung eines transparenten Dachbereichs eines Kraftfahrzeugs, eine Vorrichtung zur Abschattung eines Seitenfensters oder auch eine Laderaumabdeckung eines Kraftfahrzeugs dar.

Besonders wirkungsvoll kann dem Schubladeneffekt entgegengewirkt werden, wenn jedes Führungselement des starren Abschnitts des Abschattungselementes mit mindestens zwei in Verschieberichtung des starren Abschnitts hintereinander angeordneten Rollen versehen ist. Ein Verkippen bzw. Verkanten des starren Abschnitts bei einem auf diesen wirkenden Moment ist damit im Wesentlichen ausgeschlossen.

Bei einer zweckmäßigen Ausführungsform der Abschattungsvorrichtung nach der Erfindung sind die Drehachsen der Rollen im Wesentlichen rechtwinklig zur Ebene des Abschattungselementes ausgerichtet. Eine geringfügige Neigung der Drehachsen gegenüber der Ebene des Abschattungselements ist natürlich auch denkbar.

Die Abschattungsvorrichtung nach der Erfindung ist als Rolloanordnung ausgebildet, die als Abschattungselement eine Rollobahn aufweist, die an einer Wickeleinrichtung aufwickelbar bzw. von dieser abwickelbar ist und an dem der Wickeleinrichtung abgewandten Ende einen den starren Abschnitt bildenden Zugspriegel aufweist. Der Zugspriegel bildet dann bei einer manuellen Betätigung der Rolloanordnung das Angriffselement für einen Benutzer. Der Aufwickelvorgang auf die Wickeleinrichtung wird zweckmäßigerweise dadurch unterstützt, dass die Rollobahn bzw. die Wickeleinrichtung in Aufwickelrichtung vorgespannt ist. Dies kann beispielsweise durch eine auf ein Wickelrohr wirkende Wickelfeder einer Wickelwelle erfolgen.

Die Rollen, die an den Führungselementen ausgebildet sind, sind bei einer speziellen Ausführungsform der Abschattungsvorrichtung nach der Erfindung an Führungsbahnen geführt, die jeweils eine bezogen auf eine Längsmittelebene der Abschattungsvorrichtung außen liegende Fläche der jeweiligen Führungsschiene bilden. Alternativ oder zusätzlich können die Rollen aber auch an Führungsbahnen geführt sein, die jeweils eine bezogen auf die Längsmittelebeneder Abschattungsvorrichtung innen liegende Fläche der jeweiligen Führungsschiene darstellen.

Um ein spielfreies Abrollen der Rollen an der jeweiligen Führungsbahn zu gewährleisten und auch Toleranzen ausgleichen zu können, weist die Abschattungsvorrichtung nach der Erfindung mindestens eine Feder auf, die die Rollen gegen die jeweilige Führungsbahn vorspannt. Durch die Feder kann der mit den Rollen versehene Führungsabschnitt spielfrei gehalten sein, da die als Zug- oder Druckfeder ausgebildete Feder die Rollen stets gegen die betreffende Führungsbahn drückt.

Insbesondere wirkt die Feder auf eine Lagereinheit eines der beiden Führungselemente des starren Abschnitts, an welchem die mindestens eine Rolle vorgesehen ist und die verschiebbar mit dem starren, sich in Querrichtung erstreckenden Abschnitt verbunden ist.

Da die Abschattungsvorrichtung nach der Erfindung durch die Rollen mit einem verkippsicher geführten Zugspriegel versehen ist, kann die Rollobahn auch mit den seitlichen Führungsbändern versehen sein, die jeweils in einem Führungskanal der betreffenden Führungsschiene geführt sind und die insbesondere jeweils aus einer Rollfeder bzw. Konstantkraftfeder gebildet sind, die sich beim Aufwickeln der Rollobahn an einem jeweils als Wickeleinrichtung dienenden Bolzen selbsttätig aufwickelt. Auf eine aufwändige Wickelwelle kann damit verzichtet werden. Es ist nur erforderlich, die Randbereiche der Rollobahn mit den als Konstantkraftfedern ausgebildeten Rollfedern zu versehen.

Zur Führung der Rollfedern kann der Bolzen stirnseitig einen Führungsteller für die jeweilige Rollfeder aufweisen. An der Innenseite des Führungstellers, d. h. an der der Längsmittelebene abgewandten Seite des Führungstellers, ist dann die jeweils zugeordnete Rollfeder geführt.

Die an den Führungsbahnen der Führungsschienen geführten Rollen der erfindungsgemäß ausgebildeten Abschattungsvorrichtung können aus Kunststoff oder Metall gefertigt sein und gegebenenfalls mit einem Kugellager versehen sein. Die Führungselemente können jeweils eine Trägerkonstruktion darstellen, die aus Kunststoff und/oder Stahl gefertigt ist. Des Weiteren können die Führungselemente jeweils als Stanz- bzw. Biegeteil ausgebildet sein und auch ein kunststoffumspritztes Stahlbauteil darstellen, das, wie oben ausgeführt, insbesondere federgelagert an dem starren Abschnitt vorgesehen ist.

Weitere Vorteile und vorteilhafte Ausgestaltungen des Gegenstandes nach der Erfindung sind der Beschreibung, der Zeichnung und den Patentansprüchen entnehmbar.
Drei Ausführungsbeispiele einer als Rolloanordnung ausgebildeten Abschattungsvorrichtung nach der Erfindung sind in der Zeichnung schematisch vereinfacht dargestellt und werden in der nachfolgenden Beschreibung näher erläutert. Es zeigt
- Fig. 1: eine perspektivische Draufsicht auf ein Fahrzeugdach mit einem transparenten Deckelelement;
- Fig. 2: eine Draufsicht auf eine Rolloanordnung nach der Erfindung;
- Fig. 3: einen Schnitt durch die Rolloanordnung im Bereich eines Zugspriegels;
- Fig. 4: einen Schnitt durch eine zweite Ausführungsform einer Rolloanordnung nach der Erfindung im Bereich eines Zugspriegels, jedoch mit innengeführten Rollen; und
- Fig. 5: eine Draufsicht auf einen Zugspriegel und dessen Führungsbereiche eines einer dritten Ausführungsform einer Rolloanordnung nach der Erfindung.

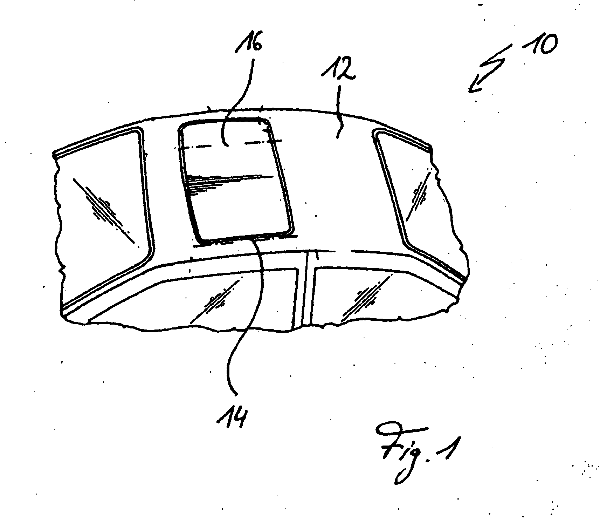

In Fig. 1 ist ein Kraftfahrzeug 10 mit einem Fahrzeugdach 12 dargestellt, das mit einem Dachausschnitt 14 versehen ist, der mittels eines transparenten Deckelelements 16 verschließbar ist.

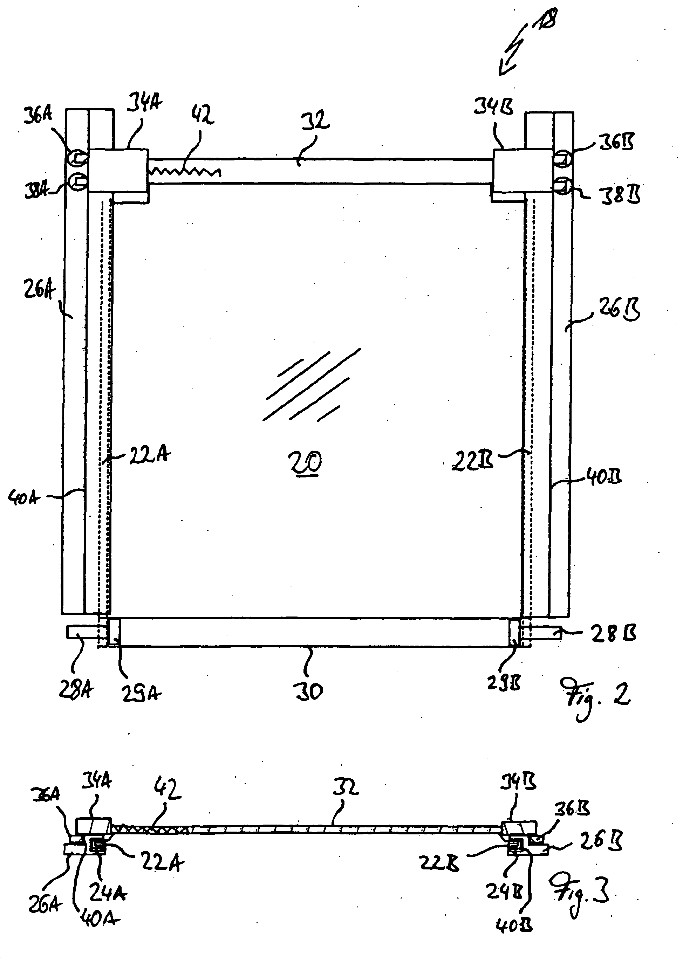

Zur Abschattung des Dachausschnitts 14 umfasst das Fahrzeugdach 12 eine Rolloanordnung 18, die in Fig. 2 in Alleinstellung dargestellt ist und manuell betätigbar ist.

Die Rolloanordnung 18 umfasst eine Rollobahn 20, die aus einem flexiblen, rollbaren Gewebe gebildet ist und im Bereich des hinteren Randes des Dachausschnitts 14 aufwickelbar ist.

Zum Aufwickeln umfasst die Rollobahn 20 seitliche Führungsbänder 22A und 22B, die jeweils zur Straffung des ausgezogenen Rollobahnbereichs in Fahrzeugquerrichtung in einem Führungskanal 24A bzw. 24B geführt sind, der an einer Führungsschiene 26A bzw. 26B ausgebildet ist. Die Führungsschienen 26A und 26B erstrecken sich entlang der seitlichen Ränder des Dachausschnitts 14 in Fahrzeuglängsrichtung. Des Weiteren sind die Führungsbänder 22A und 22B, die jeweils aus einer eine Konstantkraftfeder bildenden Rollfeder gefertigt sind, jeweils auf einen Bolzen 28A bzw. 28B aufwickelbar. Die Bolzen 28A und 28B bilden zusammen eine Wickeleinrichtung für die Rollobahn 20. Die Führungsbänder 22A, 22B bewirken durch ihre in Wickelrichtung wirkende Vorspannung, dass sich die Rollobahn 20 selbsttätig zur Bildung eines Wickelkörpers 30 auf die Bolzen 28A und 28B aufwickeln kann, die jeweils zur Führung des betreffenden Führungsbandes 22A bzw. 22B stirnseitig einen Führungsteller 29A bzw. 29B aufweisen.

An dem dem Wickelkörper 30 abgewandten Ende ist die Rollobahn 20 mit einem Zugspriegel 32 versehen, der sich in Fahrzeugquerrichtung erstreckt und zur manuellen Betätigung der Rolloanordnung 18 durch einen Benutzer dient. Ein Verschieben des Zugspriegels 32 in Fahrzeugslängsrichtung bewirkt mithin ein Aufwickeln oder Abwickeln der Rollobahn auf bzw. von den Bolzen 28A und 28B.

Der Zugspriegel 32 ist an seinen Enden jeweils mit einem Führungsabschnitt 34A bzw. 34B versehen, der an der Führungsschiene 26A bzw. 26B geführt ist. Die Führungselemente 34A und 34B stellen jeweils einen Träger bzw. eine Lagereinheit für zwei Rollen 36A und 38A bzw. 36B und 38B dar, die aus Stahl gefertigt sind und jeweils ein Kugellager aufweisen und die sich an einer im Wesentlichen parallel zur Fahrzeuglängsmittelebene ausgerichteten Führungsbahn 40A bzw. 40B der jeweiligen Führungsschiene 26A bzw. 26B abstützen. Die Drehachsen der Rollen 36A, 38A, 36B und 38B sind jeweils rechtwinklig zur Ebene des ausgezogenen Abschnitts der Rollobähn angeordnet.

Um eine spielfreie Führung des Zugspriegels 32 bzw. der Führungselemente 34A und 34B an den Führungsbahnen 40A und 40B der Führungsschienen 26A und 26B zu gewährleisten, ist des Weiteren eine Zugfeder 42 vorgesehen, die an dem Zugspriegel 32 gelagert ist und eine Zugkraft auf den Führungsabschnitt 34A ausübt, welcher bezüglich des Zugspriegels 32 verschiebbar ausgebildet ist. Durch die Zugfeder 42 ist der Zugspriegel 32 auch in einfacher Weise an den Führungsschienen 22A und 22B montierbar. Die Führungselemente 34A und 34B müssen nur parallel zur Erstreckung des Zugspriegels 32 auseinandergezogen werden, so dass sie von oben derart auf die Führungsschienen 26A und 26B aufgesetzt werden können, dass die Rollen 36A, 38A, 36B, 38B an den Führungsbahnen 40A und 40B anliegen. Die Zugfeder 42 hält die Anordnung dann in Position.

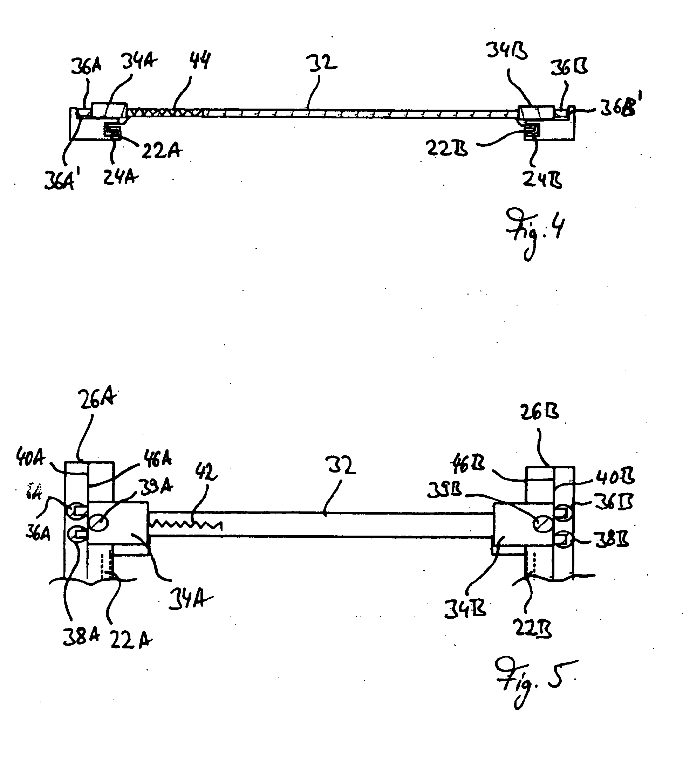

In Fig. 4 ist eine alternative Ausführungsform einer Rolloanordnung dargestellt, die sich von derjenigen nach Fig. 2 und 3 nur insofern unterscheidet, dass die Führungselemente 34A und 34B mit Rollen 36A, 38A, 36B, 38B versehen sind, die an einer bezogen auf die Längsmittelebene innen liegenden Führungsbahn 40A' anliegen. Des Weiteren ist anstelle einer Zugfeder eine Druckfeder 44 vorgesehen, die die Rollen 36A, 36B, 38A, 38B gegen die Führungsbahnen 40A' und 40B' drückt. Im Übrigen entspricht die Rolloanordnung nach Fig. 4 derjenigen nach den Figuren 2 und 3.

In Fig. 5 ist eine dritte Ausführungsform einer Rolloanordnung dargestellt, die sich von derjenigen nach den Figuren 2 und 3 dadurch unterscheidet, dass jedes Führungselement 34A bzw. 34B mit einer dritten Rolle 39A bzw. 39B versehen ist, die an einer bezogen auf die Fahrzeuglängsmittelebene innen ausgebildeten zweiten Führungsbahn 46A bzw. 46B geführt sind. Die Führungsbahnen 40A und 46A bzw. 40B und 46B sind jeweils an einem gemeinsamen Steg ausgebildet, der an der Oberseite der jeweiligen Führungsschiene 26A bzw. 26B vertikal Richtung absteht und sich in Fahrzeuglängsrichtung erstreckt. Im Übrigen entspricht die Ausführungsform nach Fig. 5 derjenigen nach den Figuren 2 und 3.

### Bezugszeichen

| | |
|---|---|
| 10 | Kraftfahrzeug |
| 12 | Fahrzeugdach |
| 14 | Dachausschnitt |
| 16 | Deckelelement |
| 18 | Rolloanordnung |
| 20 | Rollobahn |
| 22A, 22B | Führungsbänder |
| 24A, 24B | Führungskanal |
| 26A, 26B | Führungsschiene |
| 28A, 28B | Bolzen |
| 29A, 29B | Führungsteller |
| 30 | Wickelkörper |
| 32 | Zugspriegel |
| 34A, 34B | Führungselement |
| 36A, 36B | Rolle |
| 38A, 38B | Rolle |
| 40A, 40B | Führungsbahn |
| 42 | Zugfeder |
| 44 | Druckfeder |
| 46A, 46B | Führungsbahn |

## Patentansprüche

1. Abschattungsvorrichtung für ein Kraftfahrzeug, umfassend ein Abschattungselement (20), das eine Rollobahn ist, die an einer Wickeleinrichtung aufwickelbar bzw. von dieser abwickelbar ist und an dem der Wickeleinrichtung abgewandten Ende mit einem ein starres Element (32) bildenden Zugspriegel versehen ist, der sich quer zu seiner Verschieberichtung erstreckt und an seinen Enden jeweils über ein Führungselement (34A, 34B) an seitlichen Führungsschienen (26A, 26B) geführt ist, wobei die Führungselemente (34A, 34B) jeweils mindestens eine Rolle (36A, 38A, 39A; 36B, 38B, 39B) aufweisen, die an einer Führungsbahn (40A, 40B, 46A, 46B) der jeweiligen Führungsschiene (26A, 26B) abrollt, und mindestens eine Feder (42, 44) vorgesehen ist, die die Rollen (36A, 38A, 39A, 36B, 38B, 39B) gegen die jeweilige Führungsbahn (40A, 40B; 40A', 40B') vorspannt, **dadurch gekennzeichnet, dass** die Rollobahn mit seitlichen Führungsbändern (22A, 22B) versehen ist, die jeweils in einem Führungskanal (24A, 24B) der betreffenden Führungsschiene (26A, 26B) geführt sind.

2. Abschattungsvorrichtung nach Anspruch 1, **dadurch gekennzeichnet, dass** jedes Führungselement (34A, 34B) mindestens zwei in Verschieberichtung des Zugspriegels (32) hintereinander angeordnete Rollen (36A, 38A, 36B, 38B) aufweist.

3. Abschattungsvorrichtung nach Anspruch 1 oder 2, **dadurch gekennzeichnet, dass** die Drehachsen der Rollen (36A, 38A, 39A, 36B, 38B, 39B) im Wesentlichen rechtwinklig oder mit einer geringen Neigung zur Ebene des Abschattungselementes (20) ausgerichtet sind.

4. Abschattungsvorrichtung nach einem der Ansprüche 1 bis 3, **dadurch gekennzeichnet, dass** die Führungsbahnen (40A, 40B) jeweils eine bezogen auf die Längsmittelebene des Abschattungselementes (20) außen liegende Fläche der jeweiligen Führungsschiene (26A, 26B) sind.

5. Abschattungsvorrichtung nach einem der Ansprüche 1 bis 3, **dadurch gekennzeichnet, dass** die Führungsbahnen (40A', 40B', 46A, 46B) jeweils eine bezogen auf die Längsmittelebene des Abschattungselementes (20) innen liegende Fläche der jeweiligen Führungsschiene (26A, 26B) sind.

6. Abschattungsvorrichtung nach einem der Ansprüche 1 bis 5, **dadurch gekennzeichnet, dass** die Feder (42, 44) auf eine Lagereinheit wirkt, die eines der Führungselemente (34A, 34B) bildet und an der eine Rolle vorgesehen ist und die verschiebbar mit dem starren Abschnitt (32) verbunden ist.

7. Abschattungsvorrichtung nach Anspruch 1, **dadurch gekennzeichnet, dass** die Führungsbänder (22A, 22B) jeweils aus einer Rollfeder gebildet sind, die sich beim Aufwickeln der Rollobahn (20) an einem als Wickeleinrichtung dienenden Bolzen (28A, 28B) selbsttätig aufwickelt.

8. Abschattungsvorrichtung nach Anspruch 7, **dadurch gekennzeichnet, dass** der Bolzen (28A, 28B) stirnseitig einen Führungsteller (29A, 29B) für die jeweiligen Rollfeder hat.

## Claims

1. Shading device for a motor vehicle, comprising a shading element (20) which is a roller blind web which can be wound up on a winding device and can be unwound therefrom and, at the end facing away from the winding device, is provided with a tension bow which forms a rigid element (32), extends transversely with respect to its direction of displacement and, at each of its ends, is guided on lateral guide rails (26A, 26B) via a guide element (34A, 34B), wherein the guide elements (34A, 34B) each have at least one roller (36A, 38A, 39A; 36B, 38B, 39B) which rolls along a guide track (40A, 40B; 46A, 46B) of the respective guide rail (26A, 26B), and at least one spring (42, 44) is provided, said spring prestressing the rollers (36A, 38A, 39A; 36B, 38B, 39B) against the respective guide track (40A, 40B; 40A', 40B'), **characterized in that** the roller blind web is provided with lateral guide bands (22A, 22B) which are each guided in a guide channel (24A, 24B) of the guide rail (26A, 26B) in question.

2. Shading device according to Claim 1, **characterized in that** each guide element (34A, 34B) has at least two rollers (36A, 38A, 36B, 38B) arranged one behind another in the direction of displacement of the tension bow (32).

3. Shading device according to Claim 1 or 2,
**characterized in that** the axes of rotation of the rollers (36A, 38A, 39A, 36B, 38B, 39B) are oriented substantially at right angles or with a slight inclination with respect to the plane of the shading element (20).

4. Shading device according to one of Claims 1 to 3, **characterized in that** the guide tracks (40A, 40B) are each a surface of the respective guide rail (26A, 26B), which surface is on the outside with respect to the longitudinal centre plane of the shading element (20).

5. Shading device according to one of Claims 1 to 3, **characterized in that** the guide tracks (40A', 40B', 46A, 46B) are each a surface of the respective guide rail (26A, 26B), which surface is on the inside with respect to the longitudinal centre plane of the shading element (20).

6. Shading device according to one of Claims 1 to 5, **characterized in that** the spring (42, 44) acts on a bearing unit which forms one of the guide elements (34A, 34B) and on which a roller is provided and which is connected displaceably to the rigid section (32).

7. Shading device according to Claim 1, **characterized in that** the guide bands (22A, 22B) are each formed from a scroll spring which, during the winding up of the roller blind web (20), is automatically wound up on a bolt (28A, 28B) serving as winding device.

8. Shading device according to Claim 7, **characterized in that** the bolt (28A, 28B) has a guide plate (29A, 29B) on the end side for the respective scroll spring.

## Revendications

1. Dispositif abat-jour pour un véhicule automobile, comprenant un élément d'abat-jour (20), qui est une bande de store pouvant être enroulée sur un dispositif d'enroulement ou déroulée de celui-ci et qui est pourvue, à son extrémité située à l'opposé du dispositif d'enroulement, d'un arceau de traction formant un élément rigide (32), qui s'étend transversalement à sa direction de déplacement et qui est guidé à ses extrémités chaque fois par un élément de guidage (34A, 34B) dans des rails de guidage latéraux (26A, 26B), dans lequel les éléments de guidage (34A, 34B) présentent chaque fois au moins un galet (36A, 38A, 39A; 36B, 38B, 39B), qui roule sur une piste de guidage (40A, 40B, 46A, 46B) du rail de guidage respectif (26A, 26B), et il est prévu au moins un ressort (42, 44) qui précontraint les galets (36A, 38A, 39A, 36B, 38B, 39B) contre la piste de guidage respective (40A, 40B; 40A', 40B'), **caractérisé en ce que** la bande de store est pourvue de bandes de guidage latérales (22A, 22B), qui sont chaque fois guidées dans un canal de guidage (24A, 24B) du rail de guidage concerné (26A, 26B).

2. Dispositif abat-jour selon la revendication 1, **caractérisé en ce que** chaque élément de guidage (34A, 34B) présente au moins deux galets (36A, 38A, 36B, 38B) disposés l'un derrière l'autre dans la direction de déplacement de l'arceau de traction (32).

3. Dispositif abat-jour selon la revendication 1 ou 2, **caractérisé en ce que** les axes de rotation des galets (36A, 38A, 39A, 36B, 38B, 39B) sont orientés sensiblement perpendiculairement ou avec une faible inclinaison par rapport au plan de l'élément d'abat-jour (20).

4. Dispositif abat-jour selon l'une quelconque des revendications 1 à 3, **caractérisé en ce que** les pistes de guidage (40A, 40B) sont chaque fois une face du rail de guidage respectif (26A, 26B), située à l'extérieur par rapport au plan médian longitudinal de l'élément d'abat-jour (20).

5. Dispositif abat-jour selon l'une quelconque des revendications 1 à 3, **caractérisé en ce que** les pistes de guidage (40A', 40B', 46A, 46B) sont chaque fois une face du rail de guidage respectif (26A, 26B), située à l'intérieur par rapport au plan médian longitudinal de l'élément d'abat-jour (20).

6. Dispositif abat-jour selon l'une quelconque des revendications 1 à 5, **caractérisé en ce que** le ressort (42, 44) agit sur une unité de palier, qui forme un des éléments de guidage (34A, 34B) et sur laquelle il est prévu un galet, et qui est reliée de façon déplaçable à l'élément rigide (32).

7. Dispositif abat-jour selon la revendication 1, **caractérisé en ce que** les bandes de guidage (22A, 22B) sont formées chaque fois par un ressort d'enroulement, qui s'enroule automatiquement sur une tige servant de dispositif d'enroulement (28A, 28B) lors de l'enroulement de la bande de store (20).

8. Dispositif abat-jour selon la revendication 7, **caractérisé en ce que** la tige (28A, 28B) présente côté frontal un plateau de guidage (29A, 29B) pour les ressorts d'enroulement respectifs.
